(19) Europäisches Patentamt
European Patent Office
Office européen des brevets

(11) **EP 3 468 425 B1**

(12) **EUROPEAN PATENT SPECIFICATION**

(45) Date of publication and mention
of the grant of the patent:
**29.04.2020 Bulletin 2020/18**

(51) Int Cl.:
***A47J 19/02*** *(2006.01)*

(21) Application number: **17730771.7**

(22) Date of filing: **14.06.2017**

(86) International application number:
**PCT/EP2017/064572**

(87) International publication number:
**WO 2017/216239 (21.12.2017 Gazette 2017/51)**

(54) **FOOD PROCESSING APPARATUS AND ITS SPINDLE**

LEBENSMITTELVERARBEITUNGSVORRICHTUNG UND DEREN SPINDEL

APPAREIL DE TRAITEMENT ALIMENTAIRE ET SON AXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2016 EP 16174327**

(43) Date of publication of application:
**17.04.2019 Bulletin 2019/16**

(73) Proprietor: **Koninklijke Philips N.V.
5656 AG Eindhoven (NL)**

(72) Inventor: **MIKULA, Christian
5656 AE Eindhoven (NL)**

(74) Representative: **Philips Intellectual Property &
Standards
High Tech Campus 5
5656 AE Eindhoven (NL)**

(56) References cited:
**WO-A2-2014/009924       US-A- 4 385 553
US-A- 4 429 626          US-A1- 2003 154 867
US-A1- 2012 216 687**

**Description**

FIELD OF THE INVENTION

The present application relates to a food processing apparatus and its spindle.

BACKGROUND OF THE INVENTION

Food processing apparatus like masticating juicers have been used for many years. An example of such a masticating juicer is for instance provided by US 2009/064875 A1. In such juicers, food products to be juiced are inserted into the juice extractor and the solid constituents, e.g. food fibres, sometimes referred to as pulp, is separated from the juice, with the juice and pulp being expelled from the juice extractor through separate outlets. In addition to the juicing usage, some masticating juicers are also claimed to be able to make sorbet or ice cream with no replacement of the spindle in the juicers.

Yet, a lot of blocking events or blockages occur when these juicers are used to make sorbet or ice cream because the frozen fruits used are too hard to be processed or compressed. As a result, juicers may stop several times in operation so as to avoid causing damage to the motor of the apparatus, and consumers have to restart the apparatus. This will adversely affect the consumer experience. State of the art documents comprising different spindle geometries are the following: US 4 429 626 A, US 2012/216687 A1, US 2003/154867 A1, US 4 385 553 A, WO 2014/009924 A2.

SUMMARY OF THE INVENTION

The present application seeks to provide a food processing apparatus having a spindle with enhanced user experience, especially when making sorbet or ice cream.

According to one aspect of the application, there is provided a spindle for food processing. The spindle comprises a shredding part for cutting the food into shred; and a compression part for compressing the shred. The shredding part comprises a first body and a first helical member while the compression part comprises a second body connected with the first body and a second helical member. The compression ratio of the shredding part to the compression part ranges from 2 to 10.

The present application is based on the insight that with modifications and adaptations of the spindle geometry, the application torque to make sorbet or ice cream could be reduced dramatically, so that blocking events would be avoided. For example, compared with the sorbet spindle of the present application, the juicing spindle has a much higher compression ratio and therefore a much higher torque is required to deal with frozen food.

In the context of the present invention, the term "compression ratio" is defined by the ratio of the volume V1 of the shredding part to the volume V2 of the compression part.

In one embodiment of the present invention, the volume V1 of the shredding part is dependent on the average diameter D1 of the shredding part, the height H1 of the helical members of the shredding part and the pitch P1 between the helical members. In particular, the volume V1 is calculated based on the following equation: V1 = pi*D1/cos(alpha)*A1, where:

$$alpha = atan(P1/(pi*D1)); \text{ and } A1 = P1*H1.$$

Also in one embodiment, the volume V2 of the compression part is dependent on the average diameter D2 of the compression part, the height H2 of the helical members of the compression part and the pitch P2 between the helical members. In particular, the volume V2 is calculated based on the following equation: V2 = pi*D2/cos(beta)*A2, where:

$$beta = atan(P2/(pi*D2)); \text{ and } A2 = P2*H2.$$

In one embodiment of the present invention, the average diameter D1 = (D1_outer + D1_core)/2 and the height H1 = D1_outer - D1_core, where D1_outer refers to the outer diameter of the shredding part and D1_core refers to the diameter of the first body of the shredding part. Similarly, in one embodiment of the present invention, the average diameter D2 = (D2_outer + D2_core)/2 and the height H2 = D2_outer - D2_core, where D2_outer refers to the outer diameter of the compression part and D2_core refers to the diameter of the second body of the compression part.

Alternatively, the compression ratio may range from 3 to 5 to guarantee a certain creaminess or homogeneity and a good "mouth feel".

Alternatively, the diameter of the shredding part is larger than that of the compression part in order to assist in the pulp compression.

Alternatively, the second helical member has a height smaller than that of the first helical member. Combined with an increasing core diameter, this gradually reduces the available volume for the pulp on the spindle, thereby gradually shredding and compressing the food.

Alternatively, the pitch of the first helical member is larger than the pitch of the second helical member, gradually shredding and compressing the food.

According to one aspect of the present application, there is provide a food processing apparatus. The food processing apparatus comprises a spindle and a food processing chamber including a food entry section. The food entry section comprises a food inlet for feeding the food, a food processing section extending from the food entry section and at least one outlets.

The spindle extends through the food processing chamber for transporting food from the food entry section through the food processing section and is divided into two parts, i.e., shredding part and compression part. The volume ratio in the shredding part and compression part for a rotation of 90 degree (hereinafter compression ratio) is balanced for sorbet function. For a balanced food processing apparatus in which e.g., the compression ratio is configured as 2 to 10, the torque during sorbet application is in an acceptable range. In some cases, spindle with a higher compression ratio would require much higher torques, which means that the likelihood of blocking events would be much higher. With less torque required, the less likelihood of blocking events will occur.

In one embodiment of the present application, the food processing apparatus is a horizontal juice extractor.

The at least one outlets may comprise a juice outlet proximate to the shredding part, and a pulp outlet proximate to the compression part. This gives the visual impression of producing juice rather than producing pulp, as the juice outlet is predominantly visible in normal use of the juicer. This therefore gives the apparatus a well-designed aesthetic appearance, which improves its appeal and therefore its marketability. Moreover, it produces the juice in a more accessible position, thereby improving the user friendliness, for instance because it facilitates a user to place a large glass or other receptacle for collecting the juice under the juice outlet.

Alternatively, the spindle is mainly used for sorbet or ice cream making and it can be replaced by another spindle like a juice spindle for juicing. The juice spindle may also be divided into two parts: a shredding part for cutting the food into shred and a compression part for compressing the shred. The compression ratio between the shredding part and the compression part of the juice spindle ranges from 15 to 50. In daily use, the consumer may use a spindle with an adequate compression ratio (e.g., 2-10) for sorbet making and replace it with another spindle of a compression ratio about 15 to 50 for juicing. This greatly improves the usage of the juicer and also the consumer experience.

For juice making, the juice outlet and the pulp outlet of the horizontal juice extractor are kept open. Alternatively, the juice outlet is kept closed while the pulp outlet is kept open when the horizontal juice extractor is making sorbet or ice cream. The juice outlet is configured to be closed to prevent juice from running out of the juice outlet when making sorbet.

Alternatively, the shredding part extends through a first region and the compression part coupled with the shredding part extends through a second region. The first region is set closer to the food entry section than the second region. In this case, after the food is insert into the food entry section, it will firstly be cut into small pieces by the shredding part and then be compressed by the compression part.

Alternatively, the food processing apparatus may also comprise a drivetrain adapted to rotate the spindle, wherein the food processing section is located between the food entry section and said drivetrain. This also gives the apparatus a well-designed aesthetic appearance, which improves its appeal and therefore its marketability.

Alternatively, the spindle may have a decreasing outer diameter, which may be combined with an increasing core diameter, in the direction from the food entry section towards the pulp outlet such that the available volume for the pulp on the spindle is gradually reduced.

These and other aspects of the application will be apparent from and elucidated with reference to the embodiment(s) described hereinafter.

BRIEF DESCRIPTION OF THE DRAWINGS

Various embodiments and aspects of the invention are described in detail below with reference to the accompanying figures. It is to be appreciated that the accompanying drawings, are not intended to be drawn to scale. In the drawings, each identical or nearly identical component that is illustrated in various figures is represented by a like numeral. For purposes of clarity, not every component may be shown in every drawing. In the drawings:

FIG. 1 and FIG. 2 schematically depict a spindle according to an embodiment;
FIG. 3 schematically depicts a cross-section view of a spindle according to an embodiment; and
FIG. 4 schematically a horizontal juice extractor including a sorbet spindle according to an embodiment.

DETAILED DESCRIPTION OF THE EMBODIMENTS

Certain terms are used throughout the description and following claims to refer to particular components. As one skilled in the art will appreciate, electronic equipment manufactures may refer to a component by different names. This document does not intend to distinguish between components that differ in name but not function. It should be emphasized that the term "comprises/comprising" when used in this specification is taken to specify the presence of stated features, integers, steps or components but does not preclude the presence or addition of one or more other features, integers, steps, components or groups thereof. Also, as used in the specification including the appended claims, the singular forms "a", "an", and "the" include the plural unless the context clearly dictates otherwise.

In the following description and in the claims, the terms "include" and "comprise" are used in an open-ended fashion, and thus should be interpreted to mean "include, but not limited to...". Also, the term "couple" is intended to mean either an indirect or direct electrical connection. Accordingly, if one device is coupled to another device, that connection may be through a direct electrical connection, or through an indirect electrical connection via other devices and connections.

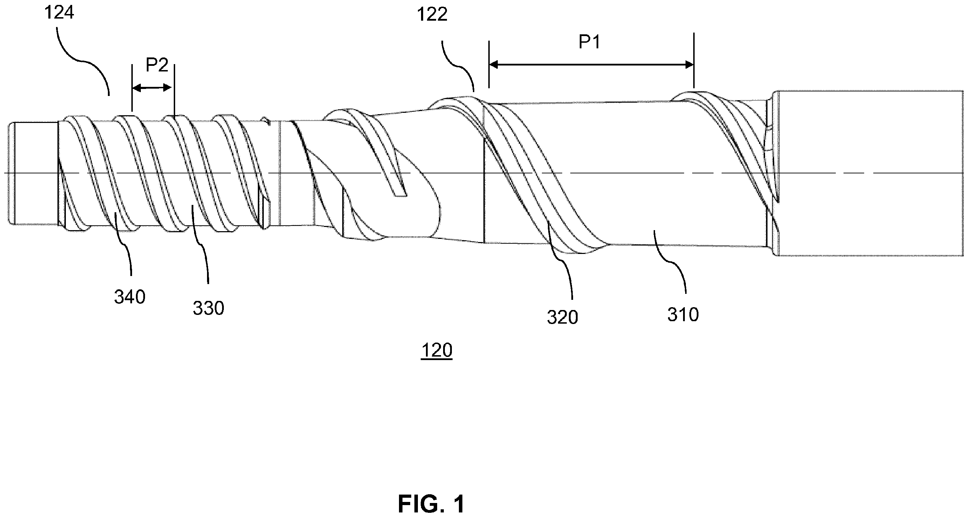

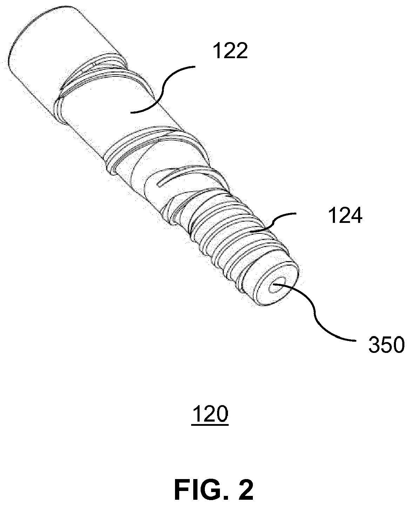

Figs. 1 and 2 schematically depict a spindle for food processing according to an embodiment. The spindle 120 comprises shredding part 122 and compression part 124. The shredding part 122 is consisted of a first body 310 and a first helical member 320. The first helical member 320 is a helical cutting portion that is present on the first body 310 at least in the food entry section 112 of the food processing chamber 110. The first helical member 320 may extend over the whole of the shredding part 122. Alternatively, the first helical member 320 may cooperate with a helical food transport portion adjoining the first helical member 320, wherein the helical food transport portion is arranged to transport the food chunks cut by the first helical member 320 from the food entry section 112 towards and through the food processing section 116.

The compression part 124 comprises a second body 330 connected with the first body 310 and a second helical member 340 which has a height smaller than that of the first helical member 320. The second helical member 340 is a helical compressing portion that may extend over at least part of the compression part 124. Alternatively, the second helical member 340 may cooperate with a helical food transport portion adjoining the second helical member 340, wherein the helical food transport portion is arranged to transport the food chunks compressed by the second helical member 340 through the food processing section 116.

In at least some embodiments, the shredding part 122 will have a constant outer diameter, which is the combination of the diameter of the first body 310 and the height H by which the first helical member 320 extends from the first body 310. It is noted for the avoidance of doubt that the diameter of the first body 310 and the height H may not be constant; for instance, in order to aid the food shredding process, the first body 310 may be a frusto-conical body having a gradually increasing diameter in the direction of the pulp outlet 119 such that the height H of the first helical member 320 reduces at the same rate and in the same direction in order to ensure that the outer diameter of the shredding part 122 remains constant. In other embodiments, the height H is constant and approximately equals to 2 mm.

In at least some embodiments, the compression part 124 will have a constant outer diameter, which is the combination of the diameter of the second body 330 and the height H by which the second helical member 340 extends from the second body 330. It is noted for the avoidance of doubt that the diameter of the second body 330 and the height H may not be constant; for instance, in order to aid the food compression process, the second body 330 may be frustoconical body having a gradually increasing diameter in the direction of the pulp outlet 119 such that the height H of the second helical member 340 reduces at the same rate and in the same direction in order to ensure that the outer diameter of the compression part 124 remains constant.

In at least some embodiments, the diameter of the shredding part 122 is larger than that in the compression part 124 in order to assist in the pulp compression. For example, the spindle 120 may have a decreasing outer diameter.

In at least some embodiments, the pitch of the first helical member 320, i.e., the distance between neighbouring turns of the first helical member 320, is constant over the full length of the shredding part 122. In some alternative embodiments, the pitch may be variable, e.g. decrease at least in a part of the shredding part 122 in order to aid with food.

In at least some embodiments, the pitch of the second helical member 340, i.e., the distance between neighbouring turns of the second helical member 340, is constant over the full length of the compression part 124. In some alternative embodiments, the pitch may be variable, e.g. decrease at least in a part of the compression part 124 in order to aid with food.

In one embodiment, the pitch of the first helical member 320 is larger than the pitch of the second helical member 340. In an alternative embodiment, the pitch of the first helical member 320 may be equal to or smaller than the pitch of the second helical member 340.

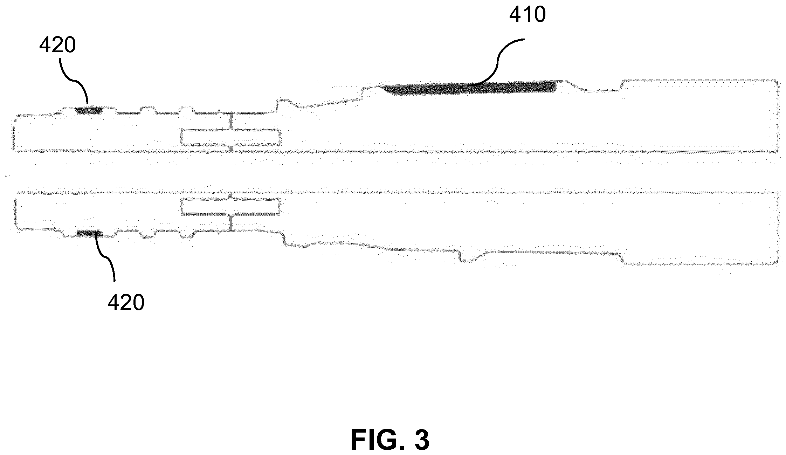

FIG. 3 schematically depicts a cross-section view of a spindle according to an embodiment. The numeral 410 indicates a shredding or cutting zone of the spindle 120. The numeral 420 indicates a compression zone of the spindle 120.

In order to meet the needs of sorbet making, in one embodiment of the present application, the area in the shredding zone for the juice spindle shall be lowered and the area in the compression zone for the juice spindle shall be raised. In one embodiment, when the spindle is used for juicing, the area in the shredding zone 410 is around 150mm$^2$ and the area in the compression zone is around 4mm$^2$. Yet, for sorbet or ice cream making, the area in the shredding zone of the spindle shall be decreased to be around 63mm$^2$, and the area in the compression zone shall be increased to be around 11mm$^2$. And the area in the compression zone can be doubled (22 mm$^2$) by designing a double threaded compression zone. In one embodiment, as shown in Fig. 3, two areas are indicated. One is the compression zone with double thread, while the other one is the shredding zone with only one thread.

In this way, with the diameter of the shredding part 122 and the compression part 124 unchanged, the compression ratio can be reduced from 27 to 4. This leads to lower required torques required when food is being processed, and the blockages can be avoided.

In another embodiment, the compression ratio can be lowered by reduction of the height of shredding rim only. For example, for juice spindle, the height of its shredding rim in the shredding part is set to be 4.3mm, while for sorbet spindle, the height of its shredding rim in the shredding part may be reduced to be around 2.0mm.

Analysis shows that the torques required would be greatly reduced by using a sorbet spindle (with height of its shredding rim 4.3mm), compared with a juicing spindle (2.0mm). For strawberry sorbet making, the average torques required are reduced from 4.1 N-m to 2.5 N·m. For pineapple sorbet making, the average torques required are reduced from 3.4 N-m to 2.4 N·m.

In one embodiment of the present application, the diameter of the compression part 124 is set constant and equals to 24.5mm, the pitch of the compression part 124 is set constant and equals to 16 mm, and the volume of the compression part 124 is set to approximately 442mm$^3$ (for an quarter of a turn). In one embodiment of the present application, the diameter of the shredding part 122 is set constant and equals to 34 mm, the pitch of the shredding part 122 is set constant and equals to 40mm, and the volume of the shredding part 122 is set to approximately 1809 mm$^3$ (for an quarter of a turn).. In this manner, the compression ratio is set to 4.1.

The above measures are measures to modify or adapt the spindle geometry such that the application torque to make sorbet or ice cream could be reduced dramatically so as to avoid blockages.

According to one aspect of the present application, there is provided a food processing apparatus. The food processing apparatus comprises a spindle and a food processing chamber including a food entry section. The food entry section comprises a food inlet for feeding the food, a food processing section extending from the food entry section and at least one outlets.

The spindle extends through the food processing chamber for transporting food from the food entry section through the food processing section and is divided into two parts, i.e., shredding part and compression part. The volume ratio in the shredding part and compression part for a rotation of 90 degree is balanced for sorbet function. For a balanced food processing apparatus in which e.g., the compression ratio is configured as 2 to 10, the torque during sorbet application can be reduced. With less torque required, the less likelihood of blocking events will occur and therefore a same motor unit in the food processing apparatus could be used.

In one embodiment of the present application, the food processing apparatus is a horizontal juice extractor. In the context of the present application, the food processing apparatus is illustrated as a horizontal juice extractor or a horizontal juicer. However, it should be understood that the food processing apparatus is not limited to horizontal juice extractor or juicer. Instead, it can be any apparatus that has functions of processing food, such as blender, mixer etc.

The term 'horizontal' as mentioned above refers to the predominant orientation of the spindle of the juice extractor when the juice extractor is placed on a horizontal surface. In some embodiments, the term 'horizontal' refers to the dominant component of the spindle orientation when this orientation is decomposed in a horizontal and a vertical component, i.e. to orientations in which the horizontal component of this orientation is larger than the vertical component. In some embodiments, the vertical component of this orientation is less than 40%, less than 30%, less than 20% or less than 10% of the overall orientation. In some embodiments, the vertical component is zero or near-zero.

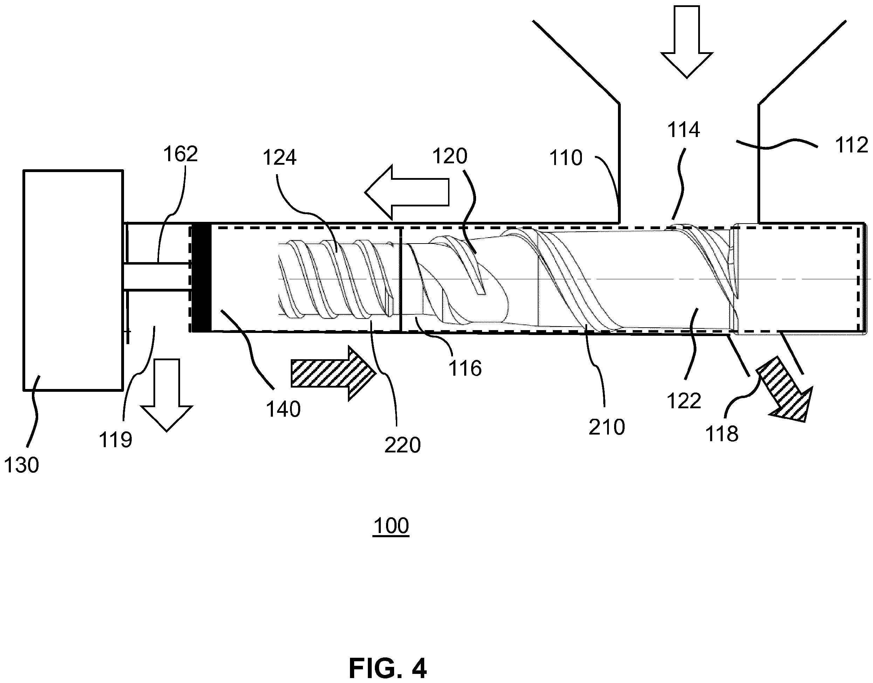

FIG. 4 schematically depicts a food processing apparatus 100 according to an embodiment. In at least some embodiments, the food processing apparatus 100 may be a horizontal juice extractor, or more particularly a masticating juice extractor. The food processing apparatus 100 comprises a main body delimiting a food processing chamber 110 in which a spindle 120 is housed. The food processing apparatus 100 further comprises a drivetrain 130 including a gearbox (not shown) that is coupled to the spindle 120, for instance through a drive shaft 162, and is arranged to rotate the spindle 120 during operation of the food processing apparatus 100.

The food processing chamber 110 comprises a food entry section 112 that is adapted to receive food inserted into the food processing apparatus 100 through a food inlet 114. The food processing chamber 110 also comprises a food processing section 116 in which the food is cut and compressed to extract the juice from the food. The food inlet 114 may have any suitable shape, e.g. a funnel shape.

In at least some embodiments, the food processing section 116 cooperates with the spindle 120 to cut the food that is transported by the spindle 120 from the food entry into chunks and compress them. Such processing is typically realized by gradually reducing the available volume housing the chunks of food as these chains are being transported from the food entry section 112 through the food processing section 116 towards a pulp outlet 119. The processing creates a pressure gradient of increasing pressure from the food entry section 112 in the direction of the pulp outlet 119. This pressure gradient forces the juice squeezed out of the chunks of food in the direction of the food entry section 112, where it can exit the food processing apparatus 100 through juice outlet 118. This for instance may be achieved by remaining a small gap between the spindle 120 and the inner wall of the food processing section 116, wherein the gap is dimensioned such that the extracted juice can flow through the gap towards the juice outlet 118, whilst preventing food pulp remaining on the spindle 120 from entering this gap, i.e. the small gap acts as a juice channel in a bottom portion of the food processing chamber 110.

In one embodiment of the present application, the juice outlet 118 is located in a bottom portion of the food processing chamber 110 such that the juice outlet 118 is located at or near a distal end of the main body relative to the drivetrain 130. This has the advantage that the food processing apparatus 100 produces the juice in a particularly accessible location, i.e. at its distal end, which facilitates juice collection and furthermore gives the appearance of the food processing apparatus 100 producing juice rather than pulp. The juice outlet 118 may be arranged such that the juice outlet 118 is further away from the drivetrain 130 than the food inlet 114, i.e. is closer to the distal end of the food processing apparatus 100, thereby for instance enabling a large glass or other suitable receptacle for collecting the juice to be placed under the juice outlet 118. It should however be understood that the juice outlet 118 may be placed in any suitable location, i.e. the juice outlet 118 is not necessarily located in the food entry section 112.

In contrast, the pulp outlet 119 is located at a proximal end of the food processing chamber 110 relative to the drivetrain 130. This has the advantage that the pulp is expelled from the food processing apparatus 100 out of immediate view of the user of the food processing apparatus 100, thus further improving its appearance.

In one embodiment, the juice outlet 118 is proximate to the shredding part of the spindle 120 and the pulp outlet is proximate to the compression part of the spindle 120. This gives the visual impression of producing juice rather than producing pulp, as the juice outlet is predominantly visible in normal use of the juicer. This therefore gives the apparatus a well-designed aesthetic appearance, which improves its appeal and therefore its marketability. Moreover, it produces the juice in a more accessible position, thereby improving the user friendliness, for instance because it facilitates a user to place a large glass or other receptacle for collecting the juice under the juice outlet.

The food processing apparatus 100 of FIG. 4 may further comprise a filter 140 arranged such that the juice extracted from the food pulp in the food processing section 116 must pass the filter 140 in the food processing section 116. The filter 140 typically comprises a plurality of apertures (not shown) for passing the juice and capturing pulp residues, such that the juice collected in the gap acting as a juice channel is relatively free of such pulp residues. In an embodiment, the filter 140 may have a planar or arcuate shape and be located in between the spindle 120 and the gap to collect the juice extracted from the food. In an alternative embodiment, the filter 140 may be an annular filter enveloping the spindle 120. The filter 140 may be secured in the main body of the food processing apparatus 100 in any suitable manner.

In another embodiment, the filter is not allocated in the compression area. Instead, the filter is located at the juice outlet side.

In one embodiment of the present application, the spindle 120 is mainly used for sorbet or ice cream making and it can be replaced by another spindle like a juice spindle specially designed for juicing. In one embodiment, the juice spindle may, like the sorbet spindle, be divided into two parts: a shredding part for cutting the food into shred and a compression part for compressing the shred. The compression ratio between the shredding part and the compression part of the juice spindle ranges from 15 to 50.

In one embodiment of the present application, the consumer may use a spindle with an adequate compression ratio (e.g., 2-10) for sorbet making and replace it with another spindle of a compression ratio about 15 to 50 for juicing. This greatly improves the usage of the juicer and also the consumer experience.

In one embodiment of the present application, for juice making, the juice outlet and the pulp outlet of the horizontal juice extractor are kept open. In another embodiment, the juice outlet is kept closed while the pulp outlet is kept open when the horizontal juice extractor is making sorbet or ice cream. The juice outlet is configured to be closed to prevent juice from running out of the juice outlet when making sorbet. Also, in at least some embodiments, sorbet can be made with the juice outlet open.

In one embodiment, the spindle 120 is arranged to transport food chunks from the food inlet 114 towards the food processing section 116 as indicated by the clear block arrows in FIG. 1. In the food processing apparatus 100, this implies that the spindle 120 is dimensioned such that the food chunks are transported towards the drivetrain 130. In other words, the first and second helical members 320 and 340 are shaped such that upon rotation of the spindle 120 by the drivetrain 130, the food chunks are transported towards the drivetrain 130.

In alternative embodiments, the pulp outlet 119 is placed distal to the drivetrain 130, such that the spindle 120 is dimensioned to transport food chunks away from the drivetrain 130.

The spindle 120 extends through the food processing chamber 110 for transporting food from the food entry section 112 through the food processing section 116. The spindle 120 is divided into two parts, i.e., shredding part 122 and compression part 124. In particular, the shredding part 122 is used for cutting the food into shred and the compression part 124 is used for compressing the shred.

In an embodiment, the volume ratio in the shredding part 122 and the compression part 124 (i.e., compression ratio) is balanced for sorbet function. For example, to achieve a balanced food processing apparatus, compression ratio is configured as 2 to 10, so that the torque during sorbet application can be reduced. With less torque required, the less likelihood of blocking events or blockages will occur.

In another embodiment, the compression ratio may range from 3 to 5 to guarantee a certain creaminess or homogeneity and a good "mouth feel". In a further embodiment, the compression ratio may be configured to be more than 4 to avoid frozen food junks being sensed.

As shown in FIG.4, the shredding part 122 extends through a first region 210. The compression part 124 is coupled with the shredding part 122 and extends through a second region 220. The first region 210 is set closer to the food entry section 112 than the second region 220. In this case, after the food is insert into the food entry section 112, it will firstly be cut into small pieces by the shredding part 122 and then be compressed by the compression part 124.

In one embodiment of the present application, the juice outlet 118 is proximate to the shredding part 122 and located in a lower portion of the first region 210. The pulp outlet 119 may be proximate to the compression part 124. This gives the visual impression of producing juice rather than producing pulp, as the juice outlet is predominantly visible in normal use of the juicer. This therefore gives the apparatus a well-designed aesthetic appearance, which improves its appeal and therefore its marketability. Moreover, it produces the juice in a more accessible position, thereby improving the user friendliness, for instance because it facilitates a user to place a large glass or other receptacle for collecting the juice under the juice outlet 18.

In another embodiment of the present application, the spindle 120 can be inverted so that the position of pulp outlet 119 and that of juice outlet 118 can be exchanged. In sorbet making, the frozen food is inserted into the food entry section 112 by means of a pusher (not shown). The spindle 120 cuts the frozen food into pieces or chunks and compresses them so as to get sorbet or ice cream from the pulp outlet 119. In this case, no or very little juice will come out of the juice outlet 118. Therefore, it may be desired to place the pulp outlet 119 in an accessible way (e.g. the pulp outlet 119 being predominantly visible) when making sorbet or ice cream. This might be different from the case of making juice.

In at least some embodiments, the spindle 120 is made of a plastic material. This has the advantage that the spindle 120 can be manufactured cheaply, for instance by molding or casting techniques and is light-weight. This facilitates easy handling of the spindle 120, for instance when it is removed from the food processing apparatus 100 for cleaning purposes, e.g. for cleaning in a dishwasher. This also facilitates easy change of the spindle 120. In one example, the user may easily replace a juicing spindle with a sorbet spindle so that he can make sorbet or ice cream by inserting frozen fruits into the functional unit instead of fresh fruits for juicing.

## Claims

1. A spindle (120) for food processing, comprising:

   a shredding part (122) for cutting the food into shred; and
   a compression part (124) for compressing the shred,
   wherein the shredding part (122) comprises a first body (310) and a first helical member (320) and the compression part (124) comprises a second body (330) connected with the first body (310) and a second helical member (340),
   wherein the compression ratio of the shredding part (122) to the compression part (124) ranges from 2 to 10, wherein the compression ratio is defined by the ratio of a first volume V1 of the shredding part (122) to a second volume V2 of the compression part (124),
   wherein the first volume V1 is defined by the following equation: $V1 = pi*D1/cos(alpha)*A1$, where D1 is an average diameter of the shredding part (122), alpha is a helix angle equal to $arctan(P1/(pi*D1))$, where P1 refers to a pitch of the first helical member (320), and A1 is area defined by $P1*H1$, where H1 is a height of the first helical member (320),
   and wherein the second volume V2 is defined by the following equation: $V2 = pi*D2/cos(beta)*A2$, where D2 is an average diameter of the compression part (124), beta is a helix angle equal to $arctan(P2/(pi*D2))$, where P2 refers to a pitch of the second helical member (340), and A2 is area defined by $P2*H2$, where H2 is a height of the second helical member (340).

2. The spindle (120) of claim 1, wherein the compression ratio ranges from 2 to 5.

3. The spindle (120) of claim 1, wherein the diameter of the shredding part (122) is larger than that of the compression part (124).

4. The spindle (120) of claim 1, wherein the second helical member (340) has a height smaller than that of the first helical member (320).

5. The spindle (120) of claim 4, wherein the pitch of the first helical member (320) is larger than the pitch of the second helical member (340).

6. A food processing apparatus (100), comprising:

   a food processing chamber (110) comprising a food entry section (112) having a food inlet (114) for feeding the food, a food processing section (116) extending from the food entry section (112) and at least one outlets (118, 119); and
   a spindle (120) according to any one of claims 1 to 5, wherein the spindle (120) extends through the food processing chamber (110) for transporting food from the food entry section (112) through the food processing section (116).

7. The food processing apparatus (100) of claim 6, wherein the food processing apparatus (100) is a horizontal juice extractor.

8. The food processing apparatus (100) of claim 7, wherein the at least one outlets (118, 119) comprise a juice outlet (118) proximate to the shredding part (122), and a pulp outlet (119) proximate to the compression part (124).

9. The food processing apparatus (100) according to any one of claims 6 to 8, wherein the spindle (120) may be used for sorbet or ice cream making and the food processing apparatus (100) further comprises a juice spindle for juicing, for replacing said spindle (120) wherein the juice spindle comprises a second shredding part for cutting the food into shred and a second compression part for compressing the shred, and wherein the compression ratio between the second shredding part and the second compression part ranges from 15 to 50.

10. The food processing apparatus (100) of claim 8, wherein the juice outlet (118) may be kept closed and the pulp outlet (119) may be kept open when the horizontal juice extractor is making sorbet or ice cream.

11. The food processing apparatus (100) of claim 8, wherein both the juice outlet (118) and the pulp outlet (119) may be kept open when the horizontal juice extractor is juicing.

12. The food processing apparatus (100) of claim 6, wherein the shredding part (122) extends through a first region (210) and the compression part (124) coupled with the shredding part (122) extends through a second region (220), and wherein the first region (210) is closer to the food entry section (112) than the second region (220).

13. The food processing apparatus (100) of claim 6, further comprising:
    a drivetrain (130) adapted to rotate the spindle (120), wherein the food processing section (116) is located between the food entry section (112) and said drivetrain (130).

14. The food processing apparatus (100) of claim 13, wherein the spindle (120) has a decreasing outer diameter in the direction from the food entry section (112) towards the drive train (130).

**Patentansprüche**

1. Spindel (120) zur Lebensmittelverarbeitung, die Folgendes umfasst:

   ein Zerkleinerungsteil (122) zum Schneiden des Nahrungsmittels in Schnitzel; und
   ein Kompressionsteil (124) zum Komprimieren der Schnitzel,
   wobei das Zerkleinerungsteil (122) einen ersten Körper (310) und ein schraubenförmiges Element (320) umfasst, und das Kompressionsteil (124) einen zweiten Körper (330), der mit dem ersten Körper (310) und einem zweiten schraubenförmigen Element (340) verbunden ist, umfasst,
   wobei das Kompressionsverhältnis des Zerkleinerungsteils (122) zu dem Kompressionsteil (124) von 2 bis 10 reicht,
   wobei das Kompressionsverhältnis durch das Verhältnis eines ersten Volumens V1 des Zerkleinerungsteils (122) zu einem zweiten Volumen V2 des Kompressionsteils (124) definiert ist,

wobei das erste Volumen V1 durch die folgende Gleichung definiert ist:

V1 = pi*D1/cos(alpha)*A1, wobei D1 ein mittlerer Durchmesser des Zerkleinerungsteils (122) ist, alpha ein Schraubenwinkel gleich arctan(P1/(pi*D1)) ist, wobei P1 auf eine Steigung des ersten schraubenförmigen Elements (320) verweist, und
A1 eine Fläche ist, die von P1*H1 definiert ist, wobei H1 eine Höhe des ersten schraubenförmigen Elements (320) ist,

und wobei das zweite Volumen V2 durch die folgende Gleichung definiert ist: V2 = pi*D2/cos(beta)*A2, wobei D2 ein mittlerer Durchmesser des Kompressionsteils (124) ist, beta ein Schraubenwinkel gleich arctan(P/2/(pi*D2)) ist, wobei P2 auf eine Steigung des zweiten schraubenförmigen Elements (340) verweist, und A2 eine Fläche ist, die von P2*H2 definiert ist, wobei H2 eine Höhe des zweiten schraubenförmigen Elements (340) ist.

2. Spindel (120) nach Anspruch 1, wobei das Kompressionsverhältnis von 2 bis 5 reicht.

3. Spindel (120) nach Anspruch 1, wobei der Durchmesser des Zerkleinerungsteils (122) größer ist als der des Kompressionsteils (124).

4. Spindel (120) nach Anspruch 1, wobei das zweite schraubenförmige Element (340) eine Höhe aufweist, die kleiner ist als die des ersten schraubenförmigen Elements (320).

5. Spindel (120) nach Anspruch 4, wobei die Steigung des ersten schraubenförmigen Elements (320) größer ist als die Steigung des zweiten schraubenförmigen Elements (340).

6. Nahrungsmittelverarbeitungsgerät (100), das Folgendes umfasst:

eine Nahrungsmittelverarbeitungskammer (110), die einen Nahrungsmitteleingangsabschnitt (112) umfasst, der einen Nahrungsmitteleinlass (114) zum Zuführen des Nahrungsmittels umfasst, einen Nahrungsmittelverarbeitungsabschnitt (116), der sich von dem Nahrungsmitteleingangsabschnitt (112) erstreckt, und mindestens einen Auslass (118, 119); und
eine Spindel (120) nach einem der Ansprüche 1 bis 5, wobei sich die Spindel (120) durch die Nahrungsmittelverarbeitungskammer (110) erstreckt, um Nahrungsmittel von dem Nahrungsmitteleingangsabschnitt (112) durch den Nahrungsmittelverarbeitungsabschnitt (116) zu transportieren.

7. Nahrungsmittelverarbeitungsgerät (100) nach Anspruch 6, wobei das Nahrungsmittelverarbeitungsgerät (100) ein horizontaler Entsafter ist.

8. Nahrungsmittelverarbeitungsgerät (100) nach Anspruch 7, wobei der mindestens eine Auslass (118, 119) einen Saftauslass (118) nahe dem Zerkleinerungsteil (122) umfasst, und einen Fruchtfleischauslass (119) nahe dem Kompressionsteil (124).

9. Nahrungsmittelverarbeitungsgerät (100) nach einem der Ansprüche 6 bis 8, wobei die Spindel (120) zum Herstellen von Sherbet oder Speiseeis verwendet werden kann, und das Nahrungsmittelverarbeitungsgerät (100) weiter eine Saftspindel zum Entsaften umfasst, um die Spindel (120) zu ersetzen, wobei die Saftspindel ein zweites Zerkleinerungsteil umfasst, um das Nahrungsmittel in Schnitzel zu schneiden, und ein zweites Kompressionsteil, um die Schnitzel zu komprimieren, und wobei das Kompressionsverhältnis zwischen dem zweiten Zerkleinerungsteil und dem zweiten Kompressionsteil von 15 bis 50 reicht.

10. Nahrungsmittelverarbeitungsgerät (100) nach Anspruch 8, wobei der Saftauslass (118) geschlossen gehalten werden kann, und der Fruchtfleischauslass (119) offen gehalten werden kann, wenn der horizontale Entsafter Sherbet oder Speiseeis herstellt.

11. Nahrungsmittelverarbeitungsgerät (100) nach Anspruch 8, wobei sowohl der Saftauslass (118) als auch der Fruchtfleischauslass (119) offen gehalten werden können, wenn der horizontale Entsafter entsaftet.

12. Nahrungsmittelverarbeitungsgerät (100) nach Anspruch 6, wobei sich das Zerkleinerungsteil (122) durch einen ersten Bereich (210) erstreckt, und sich das Kompressionsteil (124), das mit dem Zerkleinerungsteil (122) gekoppelt ist, durch einen zweiten Bereich (220) erstreckt, und wobei der erste Bereich (210) dem Nahrungsmitteleingangsabschnitt (112) näher ist als der zweite Bereich (220).

13. Nahrungsmittelverarbeitungsgerät (100) nach Anspruch 6, das weiter Folgendes umfasst:
einen Antriebsstrang (130), der angepasst ist, um die Spindel (120) zu drehen, wobei der Nahrungsmittelverarbeitungsabschnitt (116) zwischen dem Nahrungsmitteleingangsabschnitt (112) und dem Antriebsstrang (130) liegt.

14. Nahrungsmittelverarbeitungsgerät (100) nach Anspruch 13, wobei die Spindel (120) einen abnehmenden Außendurchmesser in die Richtung von dem Nahrungsmitteleingangsabschnitt (112) zu dem Antriebsstrang (130) aufweist.


**Revendications**

1. Broche (120) pour le traitement d'aliments, comprenant :

   une partie de déchiquetage (122) pour couper les aliments en petits morceaux ; et
   une partie de compression (124) pour comprimer les petits morceaux,
   dans laquelle la partie de déchiquetage (122) comprend un premier corps (310) et un premier élément hélicoïdal (320) et la partie de compression (124) comprend un second corps (330) relié au premier corps (310) et un second élément hélicoïdal (340),
   dans laquelle le rapport de compression entre la partie de déchiquetage (122) et la partie de compression (124) est compris entre 2 et 10,
   dans laquelle le rapport de compression est défini par le rapport entre un premier volume V1 de la partie de déchiquetage (122) et un second volume V2 de la partie de compression (124),
   dans laquelle le premier volume V1 est défini par l'équation suivante : $V1 = pi*D1/cos(alpha)*A1$, où D1 est un diamètre moyen de la partie de déchiquetage (122), alpha est un angle d'hélice égal à $arctan(P1/(pi*D1)$, où P1 désigne un pas du premier élément hélicoïdal (320), et A1 est une surface définie par P1*H1, où H1 est une hauteur du premier élément hélicoïdal (320),
   et dans laquelle le second volume V2 est défini par l'équation suivante : $V2 = pi*D2/cos(alpha)*A2$, où D2 est un diamètre moyen de la partie de compression (124), bêta est un angle d'hélice égal à $arctan(P2/(pi*D2)$, où P2 désigne un pas du second élément hélicoïdal (340), et A2 est une surface définie par P2*H2, où H2 est une hauteur du second élément hélicoïdal (340).

2. Broche (120) selon la revendication 1, dans laquelle le rapport de compression est compris entre 2 et 5.

3. Broche (120) selon la revendication 1, dans laquelle le diamètre de la partie de déchiquetage (122) est supérieur à celui de la partie de compression (124).

4. Broche (120) selon la revendication 1, dans laquelle le second élément hélicoïdal (340) a une hauteur inférieure à celle du premier élément hélicoïdal (320).

5. Broche (120) selon la revendication 4, dans laquelle le pas du premier élément hélicoïdal (320) est supérieur à celui du pas du second élément hélicoïdal (340).

6. Appareil de traitement d'aliments (100), comprenant :

   une chambre de traitement d'aliments (110) comprenant une section d'entrée d'aliments (112) ayant un orifice d'entrée d'aliments (114) pour délivrer les aliments, une section de traitement d'aliments (116) s'étendant à partir de la section d'entrée d'aliments (112) et au moins un orifice de sortie (118, 119) ; et
   une broche (120) selon l'une quelconque des revendications 1 à 5, dans lequel la broche (120) s'étend à travers la chambre de traitement d'aliments (110) pour transporter des aliments de la section d'entrée d'aliments (112) à travers la section de traitement d'aliments (116).

7. Appareil de traitement d'aliments (100) selon la revendication 6, dans lequel l'appareil de traitement d'aliments (100) est un extracteur de jus horizontal.

8. Appareil de traitement d'aliments (100) selon la revendication 7, dans lequel l'au moins un orifice de sortie (118, 119) comprend un orifice de sortie de jus (118) à proximité de la partie de déchiquetage (122), et un orifice de sortie de pulpe (119) à proximité de la partie de compression (124).

9. Appareil de traitement d'aliments (100) selon l'une quelconque des revendications 6 à 8, dans lequel la broche (120) peut être utilisée pour la fabrication de sorbet ou de crème glacée et l'appareil de traitement d'aliments (100) comprend en outre une broche à jus pour faire du jus, pour remplacer ladite broche (120), dans lequel la broche à jus comprend une seconde partie de déchiquetage pour couper les aliments en petits morceaux et une seconde partie de compression pour comprimer les petits morceaux, et dans lequel le rapport de compression entre la seconde partie de déchiquetage et la seconde partie de compression est compris entre 15 et 50.

10. Appareil de traitement d'aliments (100) selon la revendication 8, dans lequel l'orifice de sortie de jus (118) peut être maintenu fermé et l'orifice de sortie de pulpe (119) peut être maintenu ouvert lorsque l'extracteur de jus horizontal fabrique du sorbet ou de la crème glacée.

11. Appareil de traitement d'aliments (100) selon la revendication 8, dans lequel l'orifice de sortie de jus (118) et l'orifice de sortie de pulpe (119) peuvent être tous deux maintenus ouverts lorsque l'extracteur de jus horizontal fait du jus.

12. Appareil de traitement d'aliments (100) selon la revendication 6, dans lequel la partie de déchiquetage (122) s'étend à travers une première région (210) et la partie de compression (124) couplée avec la partie de déchiquetage (122) s'étend à travers une seconde région (220), et dans lequel la première région (210) est plus proche de la section d'entrée d'aliments (112) que la seconde région (220).

13. Appareil de traitement d'aliments (100) selon la revendication 6, comprenant en outre :
une chaîne cinématique (130) adaptée pour faire tourner la broche (120), dans lequel la section de traitement d'aliments (116) est située entre la section d'entrée d'aliments (112) et ladite chaîne cinématique (130).

14. Appareil de traitement d'aliments (100) selon la revendication 13, dans lequel la broche (120) a un diamètre externe décroissant dans la direction allant de la section d'entrée des aliments (112) vers la chaîne cinématique (130).

**FIG. 1**

EP 3 468 425 B1

122

124

350

120

**FIG. 2**

FIG. 3

EP 3 468 425 B1

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009064875 A1
- US 4429626 A
- US 2012216687 A1
- US 2003154867 A1
- US 4385553 A
- WO 2014009924 A2